**Europäisches Patentamt**

**European Patent Office**

**Office européen des brevets**

(19)

(11) Numéro de publication : **0 378 480 B1**

(12) # FASCICULE DE BREVET EUROPEEN

(45) Date de publication du fascicule du brevet :
20.05.92 Bulletin 92/21

(51) Int. Cl.⁵ : **F16L 55/00, B08B 9/04**

(21) Numéro de dépôt : **90400077.5**

(22) Date de dépôt : **10.01.90**

(54) **Engin pour inspecter l'intérieur des canalisations.**

(30) Priorité : **11.01.89 FR 8900250**

(43) Date de publication de la demande :
**18.07.90 Bulletin 90/29**

(45) Mention de la délivrance du brevet :
**20.05.92 Bulletin 92/21**

(84) Etats contractants désignés :
**AT BE CH DE DK ES GB GR IT LI LU NL SE**

(56) Documents cités :
**EP-A- 0 085 504**
**FR-A- 2 538 602**

(73) Titulaire : **SPIE-TRINDEL**
**Parc Saint-Christophe, 10 Avenue de l'Entreprise**
**F-95863 Cergy-Pontoise Cédex (FR)**

(72) Inventeur : **Jeuniaux, François**
**4 Cour Delattre de Tassigny**
**F-57100 Thionville (FR)**
Inventeur : **Liot, René**
**17 Boucle de Haies**
**F-57100 Thionville (FR)**

(74) Mandataire : **Bouju, André**
**Cabinet Bouju Derambure (Bugnion) S.A. B.P. 6250**
**F-75818 Paris Cédex 17 (FR)**

## Description

La présente invention concerne un engin pour inspecter l'intérieur des canalisations et en particulier les canalisations cylindriques d'égoûts présentant un diamètre intérieur inférieur à 600 mm.

De telles canalisations ne peuvent être visitées par des hommes. Il est donc nécessaire pour diagnostiquer l'état de la canalisation d'y faire pénétrer un engin équipé d'instruments d'observations tels que des caméras et de mesures de façon à détecter tout défaut, tel que fissures, nécessitant une réparation.

Les engins roulants c'est-à-dire équipés de roues motrices sont peu adaptés à une telle inspection.

En effet, ces engins roulants sont bloqués par le moindre obstacle à l'intérieur de la canalisation, tel qu'un éboulement partiel ou une cavité ayant une certaine profondeur.

On connaît, par les dociments FR-A-2 538 602 ou EP-A-0085504, un engin selon le préambule de la revendication 1 pour inspecter l'intérieur de canalisations comportant un corps central comportant à chacune de ses extrémités trois bras disposés sensiblement à 120° l'un de l'autre suivant l'axe du corps central. Les extrémités de ces bras peuvent s'appuyer sur la surface interne de la canalisation et le corps central comprend des moyens pour faire coulisser l'une des séries de trois bras par rapport à ce corps central pour déplacer l'engin à l'intérieur de la canalisation. Les extrémités de ces bras comprennent chacune un galet pouvant prendre appui sur la surface interne de la canalisation pour permettre un déplacement de l'engin dans la direction de l'axe de la canalisation.

Dans ces réalisations connues, pour pouvoir faire tourner l'engin autour de son axe afin de contourner un obstacle, il est nécessaire de ramener les bras portant les galets vers l'intérieur pour les écarter de la surface interne de la canalisation.

Compte tenu de la pesanteur, ce déplacement des bras entraînera nécessairement une chute de l'engin vers le bas, ce qui occasionnera un choc. De plus, dans cette position, si on fait tourner l'engin autour de son axe, un frottement sera engendré inévitablement au niveau des galets restant en contact avec la canalisation.

Le but de la présente invention est de remédier aux inconvénients des réalisations connues en créant un engin pour inspecter l'intérieur des canalisations qui puisse se déplacer aisément à l'intérieur de celles-ci et tourner sur lui-même par exemple pour éviter un obstacle sans que ce mouvement n'entraîne un choc ou une vibration susceptible d'endommager l'engin et/ou le matériel de mesure qu'il transporte.

Suivant l'invention, cet engin est caractérisé en ce que chaque galet situé aux extrémités des bras de l'engin est fixé sur un organe monté en rotation autour d'un axe sensiblement perpendiculaire à l'axe du corps central entre une position dans laquelle l'axe de rotation dudit galet est perpendiculaire à l'axe du corps central et une position dans laquelle cet axe de rotation est parallèle à l'axe du corps central.

Grâce à cette disposition, les galets peuvent se mettre dans une position perpendiculaire à celle dans laquelle ils permettent un déplacement de l'engin suivant l'axe de ce dernier.

De ce fait, l'engin peut tourner sur lui-même, par exemple pour contourner un obstacle dans la canalisation, sans que les galets ne quittent la surface interne de cette canalisation.

Le contournement d'un obstacle peut ainsi être exécuté, sans que l'engin ne subisse le moindre choc ou vibration.

De ce fait, si l'engin porte des appareils de mesure délicats, ceux-ci ne risquent pas d'être détériorés par de tels chocs ou vibrations.

Selon une version avantageuse de l'invention, les moyens pour faire coulisser comprennent un piston mobile à l'intérieur du corps central sous l'effet d'une force commandée de l'extérieur de la canalisation, ce piston étant relié à l'une des séries de bras.

Ainsi, il suffit de commander le déplacement de ce piston par une force hydraulique ou pneumatique pour faire progresser l'engin.

Selon une version préférée de l'invention, l'engin comprend des moyens pour modifier l'angle compris entre les bras et l'axe du corps central.

Ainsi, en déployant ou en repliant plus ou moins les bras par rapport à l'axe du corps central, on peut adapter ces bras au diamètre intérieur de la canalisation et modifier la force d'appui de ceux-ci sur la surface interne de cette canalisation.

Selon une autre version préférée de l'invention, l'engin comprend des moyens pour faire tourner la ou les séries de trois bras autour de l'axe du corps central.

Cette rotation des bras permet de dégager l'engin d'un obstacle rencontré par l'un des bras.

De préférence également, l'engin comprend à chacune des extrémités des bras, des moyens pour ancrer ladite extrémité à la surface interne de la canalisation, des moyens permettant à ladite extrémité de se déplacer librement sur la surface interne de la canalisation suivant l'axe de celle-ci et des moyens permettant à cette extrémité de se déplacer en tournant autour de l'axe de cette canalisation.

Ces moyens permettent ainsi de bloquer l'une des séries de bras tandis que l'autre se déplace par l'intermédiaire du piston du corps mobile.

Ces moyens permettent de plus de commander la rotation de l'une des séries de bras pour éviter un obstacle.

D'autres particularités et avantages de l'invention apparaîtront encore dans la description ci-après.

Aux dessins annexés donnés à titre d'exemples non limitatifs :

– les figures 1 à 5 sont des schémas de principe de l'engin conforme à l'invention, disposé à l'intérieur d'une canalisation et montrant les étapes successives de déplacement de l'engin à l'intérieur de la canalisation,

– la figure 6 est une vue en coupe de la figure 1,

– la figure 7 est une vue en plan d'une réalisation concrète de l'engin conforme à l'invention, la partie supérieure de la figure montrant les bras repliés et la partie inférieure les bras déployés,

– la figure 8 est une vue en coupe longitudinale, avec arrachements, et à plus grande échelle, de la partie avant de l'engin,

– la figure 9 est une vue analogue à la figure 8, montrant la partie arrière de l'engin,

– la figure 10 est une vue en coupe avec arrachement, suivant le plan X-X de la figure 8,

– la figure 11 est une vue en coupe suivant le plan XI-XI de la figure 8,

– la figure 12 est une vue en coupe, avec arrachement des bras suivant le plan XII-XII de la figure 8,

– la figure 13 est une vue suivant la flèche F1 de la figure 8,

– la figure 14 est une vue suivant la flèche F2 de la figure 8.

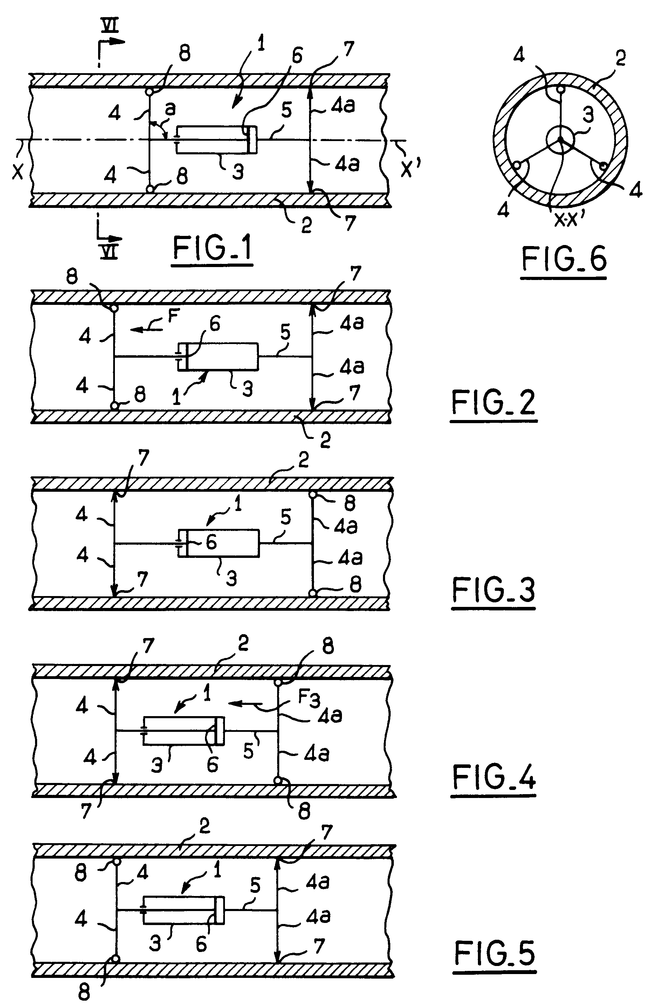

L'engin 1 pour inspecter l'intérieur de la canalisation 2 est représenté schématiquement sur les figures 1 à 6. Cet engin 1 comprend un corps central 3 dont chacune des extrémités est reliée à trois bras 4, 4a (voir figure 6) disposés sensiblement à 120° à la manière d'un tripode, suivant l'axe 5 du corps central. Les extrémités de ces bras 4, 4a s'appuient sur la surface interne de la canalisation 2.

Le corps central 3 comprend des moyens qui seront détaillés plus loin pour faire coulisser l'une des séries de trois bras 4, 4a par rapport à ce corps central 3 pour déplacer l'engin à l'intérieur de la canalisation 2.

Dans l'exemple représenté, les moyens pour faire coulisser l'une des séries de bras 4, 4a comprennent un piston 6 mobile à l'intérieur du corps central 3 sous l'effet d'une force commandée de l'extérieur de la canalisation 2. Ce piston 6 est relié à l'une 4 des séries de bras.

On verra, plus loin, que l'engin 1 comprend des moyens pour modifier l'angle a compris entre les bras 4, 4a et l'axe 5 du corps central 3 ainsi que des moyens pour faire tourner la ou les séries de trois bras 4, 4a autour de l'axe 5 du corps central 3.

L'engin 1 comprend en outre à chacune des extrémités des bras 4, 4a, des moyens 7 pour ancrer ladite extrémité à la surface interne de la canalisation 2, des moyens 8 permettant à ladite extrémité de se déplacer librement sur la surface interne de la canalisation 2 suivant l'axe X-X' de celle-ci et des moyens permettant à cette extrémité de se déplacer en tournant autour de l'axe X-X' de cette canalisation 2, cet axe étant confondu avec celui du corps central.

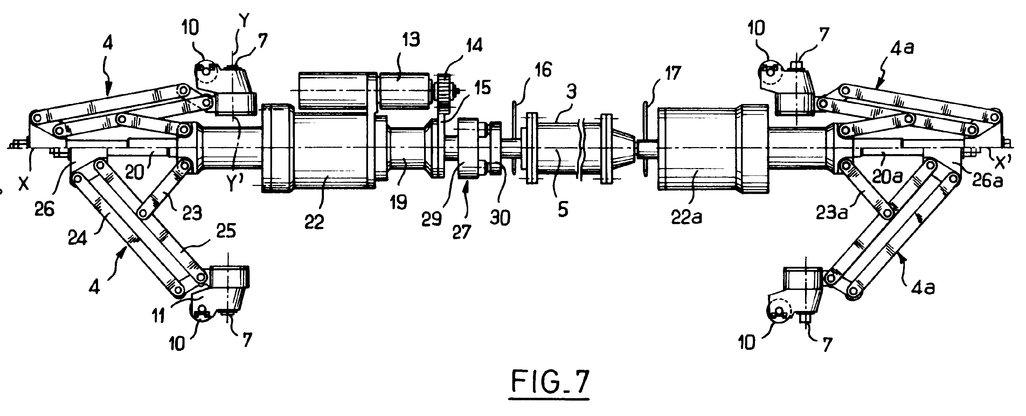

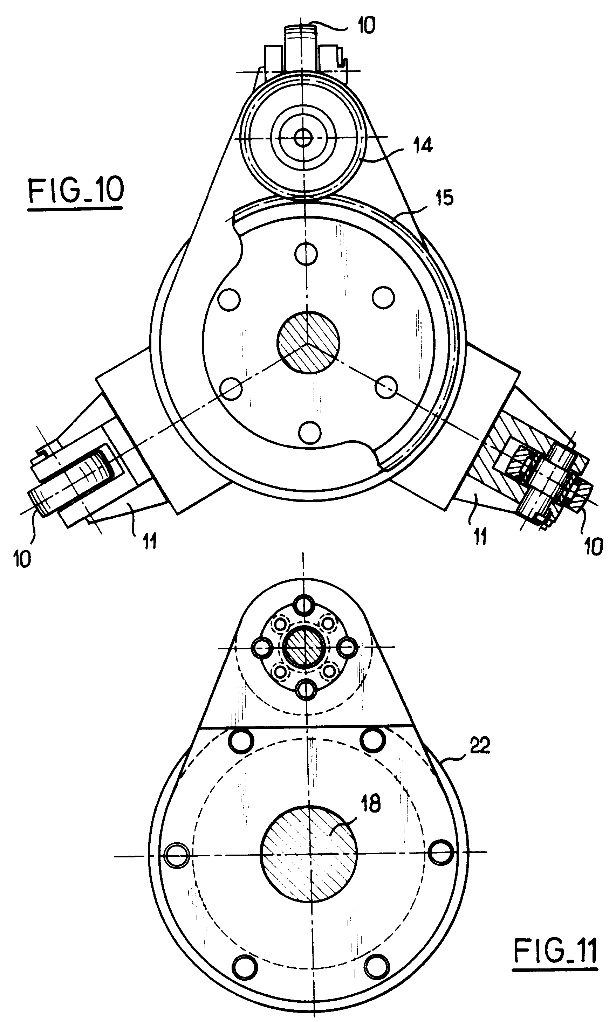

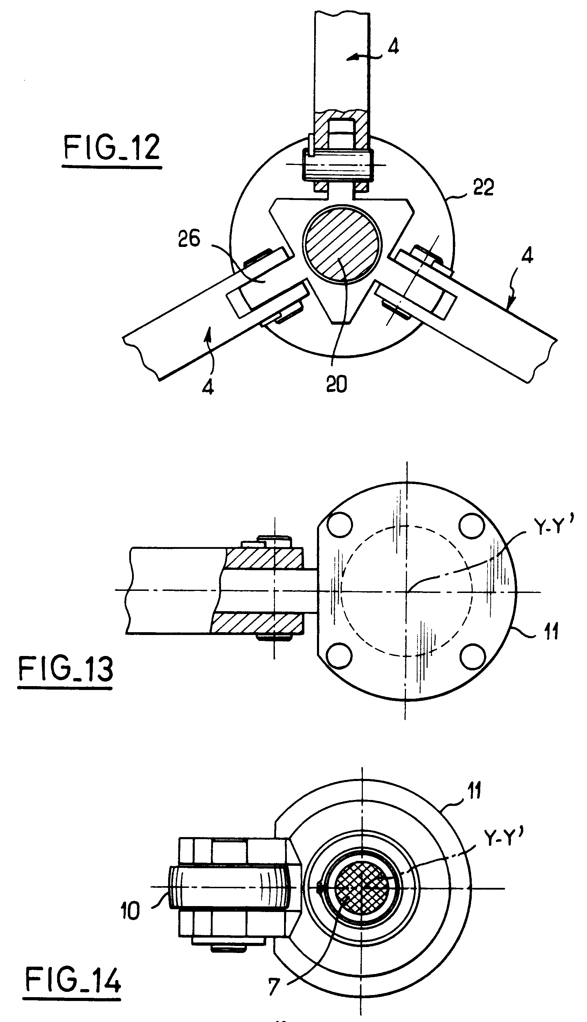

Les figures 7 à 14 représentent en détail une réalisation préférée de l'engin conforme à l'invention.

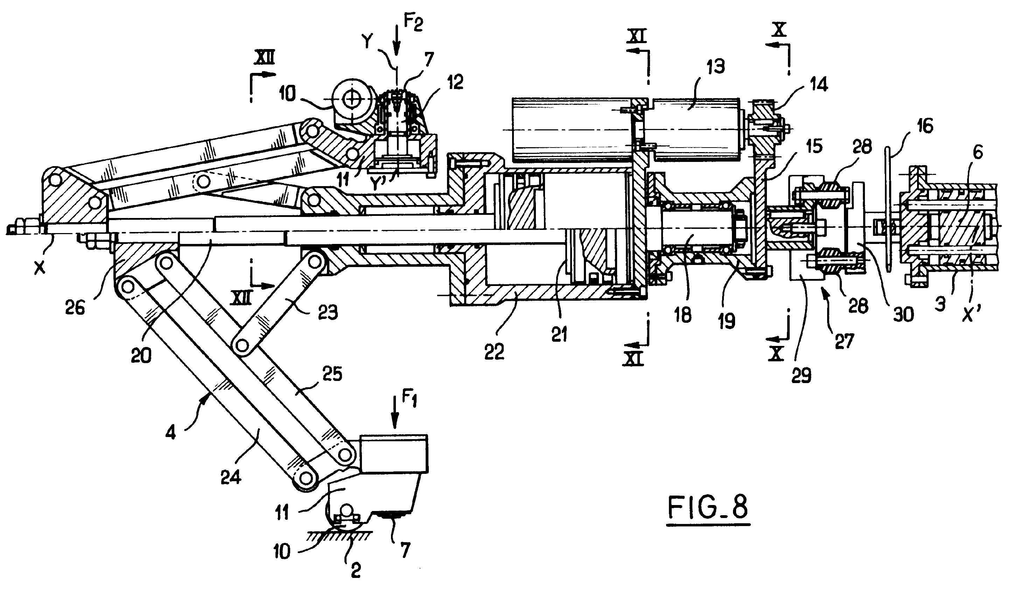

Sur cette réalisation, on retrouve le corps central 3 avec son piston 6 coulissant en son intérieur (voir figure 8) et de part et d'autre de ce corps central 3 les deux séries de bras 4, 4a formant tripode. Le coulissement du piston 6 à l'intérieur du corps central 3 peut être commandé par un fluide hydraulique ou par voie pneumatique. Un tel système de commande est bien connu et ne sera pas détaillé dans la présente description.

Dans cette réalisation, les moyens pour ancrer l'extrémité des bras 4, 4a à la surface interne de la canalisation, comprennent un doigt d'ancrage 7 (voir figures 7, 8, 9 et 14) pouvant prendre appui sur la surface interne de la canalisation 2 sous l'effet d'une force commandée de l'extérieur de la canalisation.

Les moyens pour permettre à l'extrémité des bras 4, 4a de se déplacer sur la surface interne de la canalisation 2, comprennent un galet 10 (voir figures 7, 8, 9, 10 et 14) pouvant prendre appui sur cette surface pour permettre un déplacement de l'engin 1 dans la direction de l'axe X-X' de la canalisation 2. Cette position des galets 10 est montrée sur les figures précitées. Ces galets 10 peuvent également tourner de 90° autour de l'axe Y-Y' (voir figure 8) pour permettre une rotation de l'engin autour de l'axe X-X'.

On voit, en effet sur la figure 8, que le galet 10 de chaque bras 4, 4a est fixé sur un organe 11 monté en rotation autour d'un axe Y-Y' sensiblement perpendiculaire à l'axe X-X' du corps central 3 entre une position dans laquelle l'axe de rotation dudit galet 10 est perpendiculaire à l'axe X-X' du corps central 3 et une position dans laquelle cet axe de rotation est parallèle à l'axe X-X' du corps central 3.

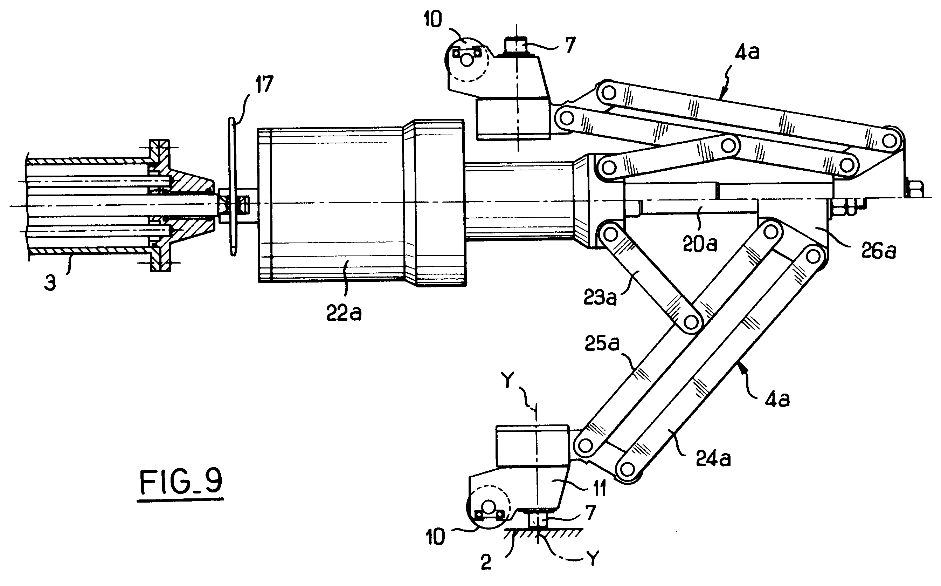

On voit d'autre part sur la figure 8, que le doigt d'ancrage 7 de chaque bras 4, 4a est solidaire d'un piston 12 mobile dans une direction Y-Y' perpendiculaire à l'axe X-X' du corps central 3 entre une position d'appui sur la surface interne de la canalisation 2 (voir figure 9) et une position dégagée de celle-ci (voir figure 8).

Le déplacement du piston 12 entre les deux positions précitées peut être commandé par un fluide hydraulique ou pneumatique selon un dispositif bien connu, non décrit dans la présente description.

L'organe rotatif 11 qui porte chaque galet 10 est monté en rotation sur l'axe Y-Y' du piston 12 de commande du doigt d'ancrage 7, ce dernier étant mobile par rapport au galet 10 entre une position en saillie (voir figure 8) et une position en retrait (voir figure 9) par rapport à celui-ci.

Par ailleurs, les moyens pour faire tourner l'une des séries de bras 4, 4a autour de l'axe X-X' comprennent un moteur électrique 13 dont le pignon de sortie 14 entraîne en rotation une roue dentée 15 solidaire du corps central 3 par une goupille 16. Ce corps central 3 est lui-même solidaire par une goupille 17 de la série de bras 4a.

La liaison entre la roue dentée 15 et la série de bras 4 comprend un palier 18 autour duquel peut tourner un manchon 19 solidaire de la roue dentée 15.

Ainsi, lorsqu'on met en route le moteur électrique 13 par une commande extérieure, non représentée, la roue 15 tourne autour du palier 18 en entraînant en rotation le corps central 3 et les bras 4a, tandis que les bras 4 restent immobiles.

On voit également sur les figures 7, 8 et 9 que les deux séries 4, 4a de trois bras sont chacune fixées de façon articulés à une tige 20, 20a, s'étendant dans l'axe X-X′ du corps central 3 et solidaire d'un piston 21 mobile à l'intérieur d'un cylindre 22, 22a qui est relié à chaque bras 4, 4a par une barre 23, 23a articulée sensiblement au milieu de chaque bras 4, 4a et permettant lors du coulissement du piston 21 de déplacer chaque bras 4, 4a entre une position déployée (voir partie inférieure des figures 8 et 9) dans laquelle l'extrémité de ce bras prend appui sur la surface interne de la canalisation 2 et une position (voir partie supérieure des figures 8 et 9) repliée vers le cylindre 22, 22a du piston 21.

Le coulissement du piston 21 peut être commandé par un fluide hydraulique ou pneumatique.

Dans la réalisation représentée sur les figures 7 à 9, chaque bras 4, 4a est composé de deux barres 24, 25 ; 24a, 25a parallèles articulées à leurs extrémités d'une part à un support 26, 26a solidaire de la tige 20, 20a du piston 21 et d'autre part à un support 11 du galet 10 et du doigt d'ancrage 7.

Par ailleurs, on voit sur la figure 8 que la liaison 27 entre le corps central 3 et le cylindre 22 adjacent aux bras 4 est élastique pour permettre une certaine flexion de l'ensemble par rapport à son axe longitudinal. Cette élasticité est assurée au moyen de blocs de caoutchouc 28 serrés entre deux flasques 29, 30. Cette disposition permet à l'engin de se déplacer à l'intérieur de canalisations non parfaitement rectilignes.

On va maintenant expliquer en référence aux figures 1 et 5, le fonctionnement de l'engin que l'on vient de décrire.

Toutes les étapes ci-dessous sont commandées automatiquement depuis l'extérieur de la canalisation 2.

a) La première étape consiste dans la mise en position d'ancrage des doigts 7 de l'une 4a des deux séries de bras, et

b) dans la mise en position d'appui des galets 8 de l'autre série 4 de bras (voir figure 1) ;

c) la seconde étape consiste dans la commande du déplacement du piston 6 dans le corps central 3 pour propulser la série de bras 4 dont les galets 8 sont en appui (voir flèche F sur la figure 2) et en fin de course, dans la mise en position d'ancrage des doigts 7 de la série de bras 4 qui vient d'être déplacée par le piston (voir figure 3) ;

e) l'étape suivante consiste dans la mise en position d'appui des galets 8 de l'autre série 4a de bras qui est restée immobile (voir également la figure 3),

f) dans une étape ultérieure (voir flèche F3 sur la figure 4), on commande le déplacement du piston 6 dans le corps central 3 pour ramener celui-ci vers la première série 4 de bras ;

g) On répète ensuite les étapes a) à f) ci-dessus.

L'engin 1 conforme à l'invention se déplace ainsi dans la canalisation 2 d'une manière rampante. Ce mode de déplacement évite tout risque de patinage, puisque l'une des séries de bras est toujours ancrée à la surface interne de la canalisation 2.

Par ailleurs, en cas d'obstacle, il est toujours possible de dégager les bras 4 ou 4a de cet obstacle en les faisant tourner autour de l'axe de la canalisation.

L'engin que l'on vient de décrire peut porter ou entraîner un chariot comprenant des instruments de mesure et/ou d'observations permettant d'inspecter ou de diagnostiquer l'état de la surface interne de la canalisation.

Les instruments de mesure et/ou d'observations pourront par exemple :

– mesurer la longueur de la canalisation,
– repérer les branchements et incidents,
– visualiser l'intérieur de la canalisation,
– mesurer l'ovalisation et établir la cartographie de la canalisation explorée,
– prélever des échantillons des effluents transportés par la canalisation,
– contrôler l'étanchéité des joints,
– mesurer la résistance mécanique de la canalisation,
– tester le degré de compactage du remblai.

## Revendications

1. Engin (1) pour inspecter l'intérieur des canalisations (2), qui comprend un corps central (3) comportant à chacune de ses extrémités trois bras (4, 4a) disposés sensiblement à 120° l'un de l'autre suivant l'axe (5, X-X′) du corps central (3), les extrémités de ces bras (4, 4a) pouvant s'appuyer sur la surface interne de la canalisation (2), le corps central (3) comprenant des moyens pour faire coulisser l'une des séries de trois bras (4, 4a) par rapport à ce corps central (3) pour déplacer l'engin (1) à l'intérieur de la canalisation (2), les extrémités de ces bras (4, 4a) comprenant chacune un galet (10) pouvant prendre appui sur la surface interne de la canalisation (2) pour permettre un déplacement de l'engin dans la direction de l'axe (X-X′) de la canalisation, caractérisé en ce que chaque galet (10) est fixé sur un organe (11) monté en rotation autour d'un axe (Y-Y′) sensiblement perpendiculaire à l'axe (X-X') du corps central (3) entre une position dans laquelle l'axe de rotation dudit galet (10) est perpendiculaire à l'axe (X-X') du corps central (3) et une position dans laquelle cet axe de rotation est parallèle à l'axe du corps central.

2. Engin conforme à la revendication 1, caractérisé en ce que les moyens pour faire coulisser comprennent un piston (6) mobile à l'intérieur du corps central (3) sous l'effet d'une force commandée de l'extérieur de la canalisation (2), ce piston (6) étant relié à l'une des séries de bras (4, 4a).

3. Engin conforme à l'une des revendications 1 ou 2, caractérisé en ce qu'il comprend à chacune des extrémités des bras (4, 4a), des moyens (7) pour ancrer ladite extrémité à la surface interne de la canalisation (2).

4. Engin conforme à la revendication 3, caractérisé en ce que les moyens pour ancrer l'extrémité des bras (4, 4a) comprennent un doigt d'ancrage (7) pouvant prendre appui sur la surface interne de la canalisation (2) sous l'effet d'une force commandée de l'extérieur de la canalisation.

5. Engin conforme à la revendication 4, caractérisé en ce que le doigt d'ancrage (7) est solidaire d'un piston (12) mobile dans une direction (Y-Y') perpendiculaire à l'axe (X-X') du corps central (3) entre une position d'appui sur la surface interne de la canalisation (2) et une position dégagée de celle-ci.

6. Engin conforme à la revendication 5, caractérisé en ce que l'organe rotatif (11) qui porte le galet (10) est monté en rotation sur l'axe (Y-Y') du piston (12) de commande du doigt d'ancrage (7), ce dernier étant mobile par rapport au galet (10) entre une position en saillie et une position en retrait par rapport à celui-ci.

7. Engin conforme à l'une des revendications 1 à 6, caractérisé en ce que les moyens pour faire tourner la ou les séries de bras (4, 4a) comprennent un moteur électrique (13) entraînant en rotation l'une des séries de bras (4a) autour de l'axe (X-X') du corps central (3).

8. Engin conforme à l'une des revendications 2 à 7, caractérisé en ce que les deux séries de trois bras (4, 4a) sont chacune fixées de façon articulée à une tige (20, 20a) s'étendant dans l'axe du corps central (X-X') et solidaire d'un piston (21) mobile à l'intérieur d'un cylindre (22, 22a) qui est relié à chaque bras par une barre articulée (25, 25a) sensiblement au milieu de chaque bras et permettant lors du coulissement du piston (21) de déplacer chaque bras (4, 4a) entre une position déployée dans laquelle l'extrémité de ce bras prend appui sur la surface interne de la canalisation (2) et une position repliée vers le cylindre (22, 22a) du piston (21).

9. Engin conforme à la revendication 8, caractérisé en ce que chaque bras (4, 4a) est composé de deux barres (24, 25; 24a, 25a) parallèles articulées à leurs extrémités d'une part à un support solidaire (26, 26a) de la tige (20,20a) du piston et d'autre part à un support (11) du galet (10) et du doigt d'ancrage (7).

10. Engin conforme à l'une des revendications 8 ou 9, caractérisé en ce que le corps central (3) comprenant le piston (6) mobile pour déplacer axialement l'une des deux séries de bras (4, 4a) par rapport à l'autre est compris entre les deux cylindres (22, 22a).

11. Engin conforme à la revendication 10, caractérisé en ce que la liaison (27) entre le corps central (3) et l'un (22) des cylindres est élastique pour permettre une certaine flexion de l'ensemble par rapport à son axe longitudinal (X-X').

## Patentansprüche

1. Vorrichtung (1) zum Untersuchen des Innenraums von Rohrleitungen (2), mit einem Mittelkörper (3), der an jedem seiner Enden drei Ausleger (4, 4a) umfaßt, die in einem gegenseitigen Winkel von im wesentlichen 120° um die Achse (5, X-X') des Mittelkörpers (3) herum angeordnet sind, wobei sich die Enden dieser Ausleger (4, 4a) auf der inneren Oberfläche der Rohrleitung (2) abstützen können, der Mittelkörper (3) Mittel zum Verschieben einer der Gruppen von je drei Auslegern (4, 4a) in bezug auf den Mittelkörper (3) umfaßt, um die Vorrichtung (1) im Innenraum der Rohrleitung (2) zu verschieben, und die Enden dieser Ausleger (4, 4a) jeweils eine Rolle (10) umfassen, die sich an der inneren Oberfläche der Rohrleitung (2) abstützen kann, um eine Verschiebung der Vorrichtung in Richtung der Achse (X-X') der Rohrleitung zu ermöglichen, dadurch gekennzeichnet, daß jede Rolle (10) an einem Element (11) befestigt ist, das um eine zur Achse (X-X') des Mittelkörpers (3) im wesentlichen senkrechte Achse (Y-Y') zwischen einer Position, in der die Drehachse der Rolle (10) senkrecht zur Achse (X-X') des Mittelkörpers (3) ist, und einer Position, in der diese Drehachse parallel zur Achse des Mittelkörpers ist, drehbar angebracht ist.

2. Vorrichtung gemäß Anspruch 1, dadurch gekennzeichnet, daß die Mittel zum Verschieben einen Kolben (6) umfassen, der im Innenraum des Mittelkörpers (3) unter der Wirkung einer von außerhalb der Rohrleitung (2) gesteuerten Kraft beweglich ist, wobei dieser Kolben (6) mit einer der Auslegergruppen (4, 4a) verbunden ist.

3. Vorrichtung nach Anspruch 1 oder 2, dadurch gekennzeichnet, daß sie an jedem der Enden der Ausleger (4, 4a) Mittel (7) zum Verankern des Endes an der inneren Oberfläche der Rohrleitung (2) umfaßt.

4. Vorrichtung nach Anspruch 3, dadurch gekennzeichnet, daß die Mittel zum Verankern des Endes der Ausleger (4, 4a) einen Verankerungszapfen (7) umfassen, der sich unter der Wirkung einer von außerhalb der Rohrleitung gesteuerten Kraft gegen die innere Oberfläche der Rohrleitung (2) abstützen kann.

5. Vorrichtung nach Anspruch 4, dadurch gekennzeichnet, daß der Verankerungszapfen (7) kraftschlüssig mit einem Kolben (12) verbunden ist, der in einer zur Achse (X-X') des Mittelkörpers (3) senkrechten Richtung (Y-Y') zwischen einer Position des Abstützens auf der inneren Oberfläche der Rohrleitung (2) und einer von dieser abgehobenen Position beweglich ist.

6. Vorrichtung nach Anspruch 5, dadurch gekennzeichnet, daß das drehbare Element (5), das die Rolle (10) trägt, drehbar an der Achse (Y-Y') des Steuerkolbens (12) des Verankerungszapfens (7) angebracht ist, wobei der letztere in bezug auf die Rolle (10) zwischen einer vorspringenden Position und einer zurückspringenden Position, bezogen auf die Rolle, beweglich ist.

7. Vorrichtung nach einem der Ansprüche 1 bis 6, dadurch gekennzeichnet, daß die Mittel zum Drehen der Gruppe oder der Gruppen von Auslegern (4, 4a) einen Elektromotor (13) umfassen, der eine der Gruppen von Auslegern (4a) um die Achse (X-X') des Mittelkörpers (3) dreht.

8. Vorrichtung nach einem der Ansprüche 2 bis 7, dadurch gekennzeichnet, daß die zwei Gruppen von je drei Auslegern (4, 4a) jeweils schwenkbar an einem Stift (20, 20a) befestigt sind, der sich in der Achse (X-X') des Mittelkörpers erstreckt und mit einem Kolben (21) kraftschlüssig verbunden ist, der im Innenraum eines Zylinders (22, 22a) beweglich ist, wobei der Zylinder (22, 22a) mit jedem Ausleger über eine schwenkbare Stange (25, 25a) verbunden ist, die im wesentlichen in der Mitte eines jeden Auslegers angelenkt ist und während der Verschiebung des Kolbens (21) die Verschiebung eines jeden Auslegers (4, 4a) zwischen einer ausgefahrenen Position, in der sich das Ende dieses Auslegers gegen die innere Oberfläche der Rohrleitung (2) abstützt, und einer zum Zylinder (22, 22a) des Kolbens (21) eingeklappten Position ermöglicht.

9. Vorrichtung nach Anspruch 8, dadurch gekennzeichnet, daß jeder Ausleger (4, 4a) aus zwei parallelen Stangen (24, 25; 24a, 25a) zusammengesetzt ist, die an ihren Enden einerseits an einem kraftschlüssig mit dem Stift (20, 20a) des Kolbens verbundenen Träger (26, 26a) und andererseits an einem Träger (11) der Rolle (10) und des Verankerungszapfens (7) angelenkt sind.

10. Vorrichtung nach Anspruch 8 oder 9, dadurch gekennzeichnet, daß der Mittelkörper (3), der den Kolben (6) enthält, der für die axiale Verschiebung einer der zwei Gruppen von Auslegern (4, 4a) in bezug auf die andere beweglich ist, zwischen den zwei Zylindern (22, 22a) liegt.

11. Vorrichtung nach Anspruch 10, dadurch gekennzeichnet, daß die Verbindung (27) zwischen dem Mittelkörper (3) und einem (22) der Zylinder elastisch ist, um eine gewisse Durchbiegung der Anordnung in bezug auf ihre Längsachse (X-X') zu ermöglichen.

## Claims

1. A device (1) for inspecting the interior of pipelines (2), comprising a central member (3) having at each end three arms (4, 4a) disposed at substantially 12Ø° from one another along the axis (5, X-X') of the central member (3), the ends of said arms (4, 4a) being adapted to bear on the inner surface of the pipeline (2), the central member (3) comprising means for sliding one of the series of three arms (4, 4a) relatively to said central member (3) to move the device (1) inside the pipeline (2), the ends of said arms (4, 4a) each comprising a roller (1Ø) adapted to bear on the inner surface of the pipeline (2) to allow movement of the device in the direction of the pipeline axis (X-X'), characterised in that each roller (1Ø) is fixed on an element (11) mounted for rotation about an axis (Y-Y') substantially perpendicular to the axis (X-X') of the central member (3) between a posiötion in which the axis of rotation of said roller (1Ø) is perpendicular to the axis (X-X') of the central member (3) and a position in which said axis of rotation is parallel to the axis of the central member.

2. A device according to claim 1, characterised in that the means for the sliding operation comprise a piston (6) movable inside the central member (3) in response to a force controlled from outside the pipeline (2), said piston (6) being connected to one of the series of arms (4, 4a).

3. A device according to claim 1 or 2, characterised in that it comprises at each of the ends of the arms (4, 4a) means (7) for anchoring the said end to the inner surface of the pipeline (2).

4. A device according to claim 3, characterised in that the means for anchoring the end of the arms (4, 4a) comprise an anchoring lug (7) adapted to bear on the inner surface of the pipeline (2) in response to a force controlled from outside the pipeline.

5. A device according to claim 4, characterised in that the anchoring lug (7) is integral with a piston (12) movable in a direction (Y-Y') perpendicular to the axis (X-X') of the central member (3) between a position in which it bears on the inner surface of the pipeline (2) and a position in which it is released therefrom.

6. A device according to claim 5, characterised in that the rotary element (11) carrying the roller (1Ø) is mounted for rotation on the axis (Y-Y') of the piston (12) actuating the anchoring lug (7), the latter being movable relatively to the roller (1Ø) between a projecting position and a retracted position relative thereto.

7. A device according to any one of claims 1 to 6, characterised in that the means for turning the or each series of arms (4, 4a) comprise an electric motor (13) rotating one of the series of arms (4a) about the axis (X-X') of the central member (3).

8. A device according to any one of claims 2 to 7, characterised is that the two series of three arms (4, 4a) are each pivotally secured to a rod (2∅, 2∅a) extending along the axis of the central member (X-X') and integral with a piston (21) movable inside a cylinder (22, 22a) which is connected to each arm by an articulated link (25, 25a) substantially at the centre of each arm and, on the sliding of the piston (21), allowing each arm (4, 4a) to move between an extended position in which the end of said arm bears on the inner surface of the pipeline (2) and a position in which it is retracted towards the cylinder (22, 22a) of the piston (21).

9. A device according to claim 8, characterised in that each arm (4, 4a) consists of two parallel links (24, 25; 24a, 25a) pivoted at their ends, on the one hand, to a support (26, 26a) integral with the rod (2∅, 2∅a) of the piston and, on the other hand, to a support (11) of the roller (1∅) and of the anchoring lug (7).

1∅. A device according to claim 8 or 9, characterised in that the central member (3) comprising the piston (6) movable for axial movement of one of the two series of arms (4, 4a) relatively to the other is contained between the two cylinders (22, 22a).

11. A device according to claim 1∅, characterised in that the connection (27) between the central member (3) and one (22) of the cylinders is resilient to allow some flexure of the assembly relatively to its longitudinal axis (X-X').

FIG.1

FIG.2

FIG.3

FIG.4

FIG.5

FIG.6

FIG_7

FIG_8

FIG_9

FIG_10

10

14

15

11   11

10   10

22

18

FIG_11

12

FIG_12

FIG_13

FIG_14